# EUROPÄISCHE PATENTANMELDUNG

(11) **EP 3 974 917 A1**
(43) Veröffentlichungstag der Anmeldung: **30.03.2022**
(21) Anmeldenummer: 20199015.7
(22) Anmeldetag: 29.09.2020
(51) Int. Cl.: G05B 13/02, G05B 19/418, G05B 19/042

(54) **VERFAHREN UND SYSTEM ZUR STEUERUNG ODER REGELUNG EINER TECHNISCHEN EINRICHTUNG**

(71) Anmelder: Siemens Aktiengesellschaft, 80333 München (DE)
(72) Erfinder: Renschler, Albert, 76275 Ettlingen (DE); Grosch, Thomas, 90574 Roßtal (DE); Laforsch, Jürgen, 77815 Bühl (DE)

(57) **Zusammenfassung**

Eine Steuer- oder Regelgröße einer technischen Einrichtung (30) wird durch zumindest eine Ausgangsgröße (A) beeinflusst, wobei die zumindest eine Ausgangsgröße (A) in Abhängigkeit von zumindest einer Eingangsgröße (E) erzeugt wird. Erfindungsgemäß wird hierbei als Eingangsgröße (E) ein prognostizierter zukünftiger Wert (P1) einer in der technischen Einrichtung (30) erfassten Größe (G) verwendet, um zeitliche Verzögerungen zwischen der Erfassung der Größe (G) und der Erzeugung der Ausgangsgröße (A) aus der Eingangsgröße (E) zumindest teilweise zu kompensieren.

Hierdurch können Verzögerungen bei der Übertragung und Verarbeitung von Werten von Eingangsgrößen (E) kompensiert und dadurch verursachte Totzeiten bei der Steuerung oder Regelung der technischen Einrichtung (30) vermieden werden.

## Beschreibung

Die Erfindung betrifft ein Verfahren und ein System zur Steuerung oder Regelung einer technischen Einrichtung gemäß Patentanspruch 1 bzw. 10. Die Erfindung betrifft ferner eine Eingabeeinheit gemäß Patentanspruch 11 und eine Steuer- oder Regelungseinrichtung gemäß Patentanspruch 14.

Bei Steuerungs- und Regelungssystemen für technische Einrichtungen (z.B. Geräte, Apparate, Maschinen, Anlagen) wird zumindest eine Steuer- oder Regelgröße der technischen Einrichtung durch zumindest eine Ausgangsgröße einer Steuer- oder Regelungseinrichtung beeinflusst.

Die Steuer- oder Regelgröße kann entweder eine wertdiskrete Größe (z. B. ein Signal zum Ein- und Ausschalten einer Pumpe) oder eine analoge, d. h. wert- und zeitkontinuierliche, Größe sein (z. B. Temperatur, Druck, Füllstand, Weg, Winkel, Drehzahl) sein.

Die Ausgangsgröße kann beispielsweise ein analoges oder binäres Stellsignal sein, das über Aktoren (z. B. Relais-Schalter, Schalt-Schütz, Magnet-Ventil oder Motor) - auch als "Aktuatoren" bezeichnet - auf das Steuerungs- oder Regelungsobjekt (technologischer Prozess, Steuerstrecke) einwirkt und hierdurch die Steuer- oder Regelgröße verändert.

Die Steuer- oder Regelungseinrichtung erzeugt dabei die zumindest eine Ausgangsgröße in Abhängigkeit von zumindest einer Eingangsgröße.

Analoge Eingangsgrößen sind beispielsweise Messignale von Sensoren von Temperatur, Druck, Füllstand, Weg, Winkel oder Drehzahl.

Binäre Eingangsgrößen sind beispielsweise Rückmeldesignale von Sensoren aus der Steuer- oder Regelstrecke bezüglich der Zustände der Steuergrößen, z. B. eine Schalterstellung (Ein/Aus), eine Ventilstellung (Offen/Geschlossen) oder ein Bewegungszustand eines Motors (Drehend/Stehend).

Gesteuert wird, z. B. eine Fertigungsstrecke oder eine Bewegung eines Antriebs.

Geregelt wird, z. B. ein Durchfluss eines Mediums durch ein Rohr, ein Füllstand einer Flüssigkeit in einem Behälter oder eine Drehzahl bzw. Drehmoment eines elektrischen Motors.

Derartige Steuerungs- und Regelungssysteme kommen beispielsweise in Prozessleitsystemen zum Einsatz. Prozessleitsysteme dienen zur Automatisierung von Prozessen in technischen Anlagen. Bei den automatisierten Prozessen kann es sich beispielsweise um verfahrens- oder fertigungstechnische Prozesse oder Prozesse zur Erzeugung oder Verteilung von elektrischer Energie handeln.

Prozessleitsysteme sind üblicherweise hierarchisch durch mehrere Ebenen strukturiert (siehe z. B. EP 3 125 053 B1). Auf einer untersten Ebene, der sogenannten Feldebene, werden mittels als Sensoren ausgebildeter Feldgeräten (z.B. Druckmessumformer, Temperatursensor, Füllstandsensor, Durchflusssensor) die Zustände des technischen Prozesses erfasst bzw. mittels als Aktoren ausgebildeter Feldgeräte (z.B. Stellungsregler für Regelventile) der Prozess gezielt beeinflusst.

Darüber liegt eine Steuerungs- und/oder Regelungsebene mit Steuer- und/oder Regelungseinrichtungen, bei denen üblicherweise eine Verarbeitungseinheit (CPU - central processing unit) als Bestandteil einer speicherprogrammierbaren Steuerung feldnahe Steuerungs- und/oder Regelungsfunktionen möglichst in Echtzeit ausführt, wobei sie als Eingangsgrößen Werte von Größen des Prozesses von den Sensoren empfangen und als Ausgangsgrößen z.B. Befehle an die Aktoren abgeben.

Auf der wiederum darüber liegenden Prozessführungsebene findet in Leitrechnern eine übergeordnete Steuerung und Regelung statt, wobei ein aus einer oder mehreren Operatorstationen bestehendes Operatorsystem das Bedienen und Beobachten des Prozesses durch das Bedienpersonal der Anlage ermöglicht.

Ein Datenaustausch zwischen den Feldgeräten und der Verarbeitungseinheit der speicherprogrammierbaren Steuerung erfolgt üblicherweise über einen digitalen Feldbus, wie z. B. PROFIBUS DP oder PROFINET. Da die Feldgeräte oft selbst keinen entsprechenden Feldbusanschluss aufweisen, werden sie über dezentrale Peripheriestationen an den digitalen Feldbus angebunden. Eine Peripheriestation besteht üblicherweise aus einem Interfacemodul (Kopfbaugruppe) zum Anschluss an den digitalen Feldbus und einer Anzahl von Peripheriebaugruppen (vor allem digitale und analoge Ein- und Ausgabeeinheiten) zum Anschluss der Feldgeräte. Jede Eingabe- oder Ausgabeeinheit kann dabei nur einen einzigen sogenannten "Kanal" zum Anschluss eines einzigen Feldgerätes aufweisen. Sie kann aber auch mehrere Kanäle zum Anschluss mehrerer Feldgeräte aufweisen.

Üblicherweise befindet sich die Peripheriebaugruppe dabei unmittelbar vor Ort im Feld bei den Feldgeräten, während sich die speicherprogrammierbare Steuerung an einem zentraleren Punkt der Anlage befindet. Sehr zukunftsgerichtete Steuerungs- und Regelungskonzepte sehen sogar eine cloud-basierte Steuerungs- oder Regelungseinrichtung vor.

In einem typischen Ablauf werden von der Verarbeitungseinheit zyklisch die von den Eingabeeinheiten der Peripheriebaugruppen bereitgestellten Werte der Eingangsgrößen nacheinander eingelesen, verarbeitet und Werte für Ausgangsgrößen erzeugt. Diese Werte für die Ausgangsgrößen werden abschließend in die Ausgabeeinheiten geschrieben.

Ein Problem stellt aber hierbei dar, dass die zum Zeitpunkt der Verarbeitung in der Verarbeitungseinheit vorliegenden (scheinbaren) "Ist"-Werte der von den Eingabeeinheiten bereitgestellten Eingangsgrößen bereits veraltet und nicht mehr aktuell sind. Diese Verzögerung wirkt bei der Steuerung oder Regelung als (zusätzliche) Totzeit. Die Gründe für diese Verzögerung liegen beispielsweise in:
- dem gesamten Vorgang der Signalaufbereitung in der Eingabeeinheit, z.B. Analog-Digital-Wandlung und Filterung,
- der Übertragung über teilweise langsame Feldbusse zu einem Feldbus-Controller,
- der Übertragung vom Feldbus-Controller zur Verarbeitungseinheit, und
- Verzögerungen dadurch, dass vor der Verarbeitung zuerst die Werte aller oder zumindest einer Gruppe von Eingabeeinheiten eingelesen werden.

Dieses Problem kommt, insbesondere bei Prozessleitsystemen für räumlich groß verteilte Anlagen der Verfahrens- oder Fertigungstechnik zum Tragen, insbesondere bei Anlagen, die sich über mehrere Quadratkilometer erstrecken können, wie z. B. Anlagen der chemischen Industrie, Öl- und Gas-Industrie, Metallindustrie, Bergwerke, Kraftwerke, Verkehrsinfrastruktur (Flughäfen, Tunnel), etc..

Um die schlechte(re) Steuerungs- und Regelungs-Qualität aufgrund veralteter Werte etwas auszugleichen, werden ersatzweise die Verarbeitungszyklen verkürzt. Der häufigere Durchlauf belastet aber insbesondere die Verarbeitungseinheit. Außerdem ist eine höhere Übertragungs-Bandbreite nötig.

Ein anderer Ansatz ist die sogenannte Takt-Synchronität, bei der Erfassen, Verarbeiten und Ausgeben streng getaktet erfolgt. Die Verzögerung zwischen Erfassen und Verarbeiten wird nicht beseitigt, aber deterministisch. Nachteilig sind hierbei die aufwändige Projektierung und die schlechte Änderbarkeit im laufenden Betrieb. Außerdem sind üblicherweise besonders dafür vorgesehene und damit teure Komponenten erforderlich.

Es ist deshalb Aufgabe vorliegender Erfindung, die Auswirkungen der vorstehend erläuterten Verzögerungen zu reduzieren.

Die Lösung dieser Aufgabe gelingt durch ein Verfahren und ein System zur Steuerung oder Regelung einer technischen Einrichtung gemäß Patentanspruch 1 bzw. 10. Eine Eingabeeinheit ist Gegenstand des Patentanspruchs 11, eine dezentrale Peripheriestation und ein Feldgerät mit einer derartigen Eingabeeinheit sind Gegenstand der Patentansprüche 12 bzw. 13, und eine Steuer- oder Regelungseinrichtung ist Gegenstand des Patentanspruchs 14. Vorteilhafte Ausgestaltungen sind jeweils Gegenstand der Unteransprüche.

Der Erfindung liegt die Erkenntnis zugrunde, dass zeitliche Verzögerungen zwischen der Erfassung der Eingangsgrößen und der Erzeugung der Ausgangsgrößen aus den Eingangsgröße, insbesondere Verzögerungen bei der Übertragung von Eingangsgrößen, nicht eliminiert werden können, und allenfalls mit hohem Aufwand reduziert werden können. Damit eine Verarbeitungseinheit bei der Erzeugung der Ausgangsgrößen in Abhängigkeit von Eingangsgrößen dennoch tatsächlich aktuelle "Ist"-Werte für Eingangsgrößen verarbeiten kann anstatt von "Alt"-Werten, müssen der Verarbeitungseinheit vorausschauend prognostizierte "Zukunfts"-Werte als Eingangsgrößen bereitgestellt werden. Wenn die prognostizierten Werte um eine Zeitspanne in der Zukunft liegen, die sich in der Größenordnung der erläuterten zeitlichen Verzögerungen, insbesondere der Übertragungszeiten, bewegt, können diese zeitliche Verzögerungen zumindest teilweise, vorzugsweise ganz, kompensiert werden.

Eine in der technischen Einrichtung erfasste Größe kann hierzu kontinuierlich mitverfolgt werden und mithilfe algorithmischer Verfahren können zusätzlich zum oder anstatt dem aktuellen Wert dieser Größe einer oder mehrere in die Zukunft prognostizierte Werte dieser Größe erzeugt werden und als Eingangsgröße für die Steuerung oder Regelung verwendet werden.

Erfindungsgemäß wird als Eingangsgröße deshalb ein prognostizierter zukünftiger Wert einer in der technischen Einrichtung erfassten Größe verwendet, um zeitliche Verzögerungen zwischen der Erfassung der Größe und der Erzeugung der Ausgangsgröße aus der Eingangsgröße zumindest teilweise zu kompensieren.

Der prognostizierte Wert liegt hierzu vorzugsweise um eine Zeitspanne in der Zukunft, wobei die Zeitspanne in Abhängigkeit der zeitlichen Verzögerungen zwischen der Erfassung der Größe und der Erzeugung der Ausgangsgröße aus der Eingangsgröße eingestellt wird.

Da die Genauigkeit der Prognose mit zunehmender Zeitspanne abnimmt, ist die Zeitspanne bevorzugt gleich oder kleiner als die Summe dieser zeitlichen Verzögerungen. Vorteilhaft wird ein Optimum eingestellt zwischen der Verarbeitung möglichst aktueller Werte (Zeitspanne möglichst groß) und Genauigkeit der Prognose (Zeitspanne möglichst klein).

Die Prognose kann durch den Fachmann geläufige Mittel, wie z. B. Fortschreiben des Verlaufs, künstliche Intelligenz, Mustererkennung, o.ä. erfolgen. Beispielsweise ändert sich der Füllstand in einem Tank, welcher oben zylindrisch und unten konisch ist, selbst bei einem konstanten Zu- oder Abfluss nicht stetig, sondern weist am Knick des Tanks eine Unstetigkeit auf. Auch bei unregelmäßigem Zu- und/oder Abfluss wird sich der Knick auswirken und letztlich ein Muster ausbilden, das mittels Mustererkennung vorhersagbar ist.

Bei der Größe der technischen Einrichtung, die erfasst und deren Wert ermittelt wird, handelt es sich bevorzugt um ein analoges Sensorsignal (z.B. eines Temperatur-, Druck-, Füllstand- oder Durchflusssensors). Es kann sich aber auch um ein binäres Sensorsignal, wie z. B. eine Schalterstellung (Ein/Aus), eine Ventilstellung (Offen/Geschlossen) oder um einen Bewegungszustand eines Motors (Drehend/Stehend), handeln.

Gemäß einer besonders vorteilhaften Ausgestaltung umfasst das erfindungsgemäße Verfahren die folgenden Schritte:
a) Erfassen einer Größe der technischen Einrichtung,
b) Ermitteln eines (aktuellen) Wertes der Größe,
c) Prognostizieren zumindest eines zukünftigen Wertes der Größe auf Basis zumindest des ermittelten (aktuellen) Wertes der Größe,
d) Verwenden des zumindest einen prognostizierten zukünftigen Wertes der Größe als Eingangsgröße für die Erzeugung der zumindest einen Ausgangsgröße.

Die Prognose des zukünftigen Wertes der Größe kann lediglich auf Basis des ermittelten aktuellen Wertes der Größe erfolgen. Für eine bessere Genauigkeit der Prognose erfolgt die Prognose aber vorzugsweise unter Nutzung bzw. in Abhängigkeit von weiteren Werten, wie z. B.:
- Nutzung von weiteren früher ermittelten Werten der Größe,
- Nutzung von bereits früher prognostizierten Werten der Größe,
- Nutzung von ermittelten aktuellen und/oder früheren Werten anderer erfassten Größen,
- Nutzung von bereits früher prognostizierten Werten anderer Größen.

Wenn die Erzeugung der zumindest einen Ausgangsgröße in Abhängigkeit von der zumindest einen Eingangsgröße in einer Steuer- oder Regelungseinrichtung erfolgt, dann werden bevorzugt zumindest die Schritte a) und b) außerhalb der Steuer- oder Regelungseinrichtung durchgeführt.

Der Schritt c) kann grundsätzlich an jeder geeigneten Stelle auf einer Übertragungsstrecke zwischen der Erfassung des Wertes der Eingangsgröße und der Steuer- oder Regelungseinrichtung, oder sogar in der Steuer- oder Regelungseinrichtung selbst, durchgeführt werden.
Gemäß einer besonders vorteilhaften Ausgestaltung werden aber sämtliche Schritte a) bis c) außerhalb der Steuer- oder Regelungseinrichtung, insbesondere in einer dezentralen Peripheriestation oder in einem Feldgerät, durchgeführt, und der zumindest eine prognostizierte zukünftige Wert der Größe wird an die Steuer- oder Regelungseinrichtung übertragen. Der Steuer- oder Regelungseinrichtung wird folglich der prognostizierte zukünftige Wert der Größe für die Steuerung oder Regelung der Einrichtung von außerhalb zugeführt.

Es ist dabei auch möglich, die Durchführung der Schritte a) bis c) auf mehrere Komponenten zu verteilen. So können beispielsweise die Schritte a) bis b) in einer ersten Komponente außerhalb der Steuer- oder Regelungseinrichtung, insbesondere in einer dezentralen Peripheriestation oder in einem Feldgerät, durchgeführt werden, und der Schritt c) in einer zweiten Komponente durchgeführt werden, die entlang einer Übertragungsstrecke von der ersten Komponente zu der Steuer- oder Regelungseinrichtung angeordnet ist, insbesondere in einer Steuerung eines Feldbusses.

Gemäß einer weiteren vorteilhaften Ausgestaltung wird der Wert der Größe zu einem ersten Zeitpunkt ermittelt und der zumindest eine prognostizierte zukünftige Wert bezieht sich auf einen zweiten Zeitpunkt, der um eine definierte oder definierbare Zeitspanne gegenüber dem ersten Zeitpunkt in der Zukunft liegt.

Die Zeitspanne kann dann bevorzugt in Abhängigkeit von einer Übertragungszeit des ermitteln (aktuellen) Wertes der Größe oder des prognostizierten zukünftigen Wertes der Größe zu einer Steuer- oder Regelungseinrichtung eingestellt werden, die die zumindest eine Ausgangsgröße in Abhängigkeit von der zumindest einen Eingangsgröße erzeugt. Hierdurch kann sehr einfach eine konstante Übertragungszeit von einer Komponente, die die Größe erfasst, zu einer Steuer- oder Regelungseinrichtung ausgeglichen werden.

Bevorzugt ist die Zeitspanne gleich oder kleiner als diese Übertragungszeit. Es kann hierbei ein Optimum eingestellt werden zwischen der Genauigkeit der Prognose (je größer die Zeitspanne umso ungenauer die Prognose) und der Verarbeitung von veralteten Werten der Eingangsgröße (je größer die Zeitspanne umso veralteter die Werte der Eingangsgröße).

Gemäß einer weiteren vorteilhaften Ausgestaltung wird der Wert der Größe zu einem ersten Zeitpunkt ermittelt und daraus werden mehrere prognostizierte zukünftige Werte erzeugt, die sich auf mehrere Zeitpunkte in der Zukunft beziehen, die um jeweils unterschiedliche Zeitspannen gegenüber dem ersten Zeitpunkt in der Zukunft liegen.

Der ermittelte (aktuelle) Wert der Größe sowie der Zeitpunkt der Ermittlung des Wertes der Größe und sämtliche prognostizierten zukünftigen Werte dieser Größe können dazu in einem gemeinsamen Datensatz, beispielsweise an eine Steuer- oder Regelungseinrichtung, ausgegeben werden.

Es kann dann eine Auswahl eines oder mehrerer der prognostizierten zukünftigen Werte der Größe als Eingangsgröße in Abhängigkeit von einer Übertragungszeit des ermittelten (aktuellen) Wertes der Größe oder der prognostizierten zukünftigen Werte der Größe zu einer Steuer- oder Regelungseinrichtung erfolgen, die die zumindest eine Ausgangsgröße in Abhängigkeit von der zumindest einen Eingangsgröße erzeugt.

Beispielsweise kann die Steuer- oder Regelungseinrichtung den Zeitpunkt des Empfangs des Datensatzes ermitteln und in Abhängigkeit von einer Differenz zwischen diesem Zeitpunkt des Empfangs und dem übertragenen Zeitpunkt der Ermittlung des (aktuellen) Wertes der Größe einen der prognostizierten zukünftigen Werte dieser Größe für die Steuerung oder Regelung der technischen Einrichtung auswählen.

Diese Ausgestaltung des Verfahrens eignet sich besonders für den Fall, dass die Übertragungszeit von der Erfassung der Größe zu der Steuer- oder Regelungseinrichtung variabel ist. Eine maximale Flexibilität und Adaptierbarkeit an sich ändernden Übertragungszeiten ist möglich, wenn die zeitlichen Abstände der prognostizierten zukünftigen Werte äquidistant sind, die zeitlichen Abstände parametrierbar sind, die Anzahl dieser Werte parametrierbar ist und alle diese Werte zeitgestempelt sind.

Ein erfindungsgemäßes System zur Steuerung oder Regelung einer technischen Einrichtung umfasst eine Steuer- oder Regelungseinrichtung mit zumindest einer Ausgangsgröße, durch die eine Steuer- oder Regelgröße der technischen Einrichtung beeinflussbar ist. Die Steuer- oder Regelungseinrichtung ist ausgebildet, die zumindest eine Ausgangsgröße in Abhängigkeit von zumindest einer Eingangsgröße zu erzeugen. Die Eingangsgröße ist hierbei ein prognostizierter zukünftiger Wert einer in der technischen Einrichtung erfassten Größe, um zeitliche Verzögerungen zwischen der Erfassung der Größe und der Erzeugung der Ausgangsgröße aus der Eingangsgröße zumindest teilweise zu kompensieren.

Eine erfindungsgemäße Eingabeeinheit zur Erzeugung einer Eingangsgröße für eine Steuer- oder Regeleinrichtung einer technischen Einrichtung ist dazu ausgebildet, die folgenden Schritte durchzuführen:
a) Erfassen einer Größe der technischen Einrichtung, insbesondere eines analogen Sensorsignales,
b) Ermitteln eines (aktuellen) Wertes der Größe,
c) Prognostizieren zumindest eines zukünftigen Wertes der Größe auf Basis zumindest des ermittelten Wertes der Größe,
d) Ausgeben des prognostizierten zukünftigen Wertes der Größe.

Die vorstehend im Zusammenhang mit dem erfindungsgemäßen Verfahren beschriebenen Ausgestaltungen der Verfahrens-Schritte a) bis c) und deren genannten Vorteile sind gleichermaßen anwendbar für die erfindungsgemäße Eingabeeinheit.
Vorzugsweise weist die Eingabeeinheit eine Schnittstelle zu einer Kommunikationseinrichtung auf und ist ausgebildet, den prognostizierten zukünftigen Wert der Größe über diese Schnittstelle an die Kommunikationseinrichtung auszugeben.

Eine erfindungsgemäße dezentrale Peripheriestation umfasst eine vorstehend beschriebene Eingabeeinheit.

Weiterhin umfasst ein erfindungsgemäßes Feldgerät eine vorstehend beschriebene Eingabeeinheit.

Bei einer erfindungsgemäßen Steuer- oder Regelungseinrichtung für eine technische Einrichtung, wobei die Steuer- oder Regelungseinrichtung zumindest eine Ausgangsgröße in Abhängigkeit von zumindest einer Eingangsgröße erzeugt, ist die Eingangsgröße ein prognostizierter zukünftiger Wert einer in der technischen Einrichtung erfassten Größe.

Gemäß einer vorteilhaften Ausgestaltung weist die Steuer- oder Regelungseinrichtung eine Schnittstelle zu einer Kommunikationseinrichtung auf und ist ausgebildet, den prognostizierten zukünftigen Wert der Größe über diese Schnittstelle von der Kommunikationseinrichtung zu empfangen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: einen Ausschnitt aus einem Prozessleitsystem mit einer Peripheriebaugruppe,
- FIG 2: eine erste Ausgestaltung einer erfindungsgemäßen Eingabeeinheit als Analog-Eingabeeinheit,
- FIG 3: eine zweite Ausgestaltung einer erfindungsgemäßen Eingabeeinheit als Analog-/Binäre-Eingabeeinheit,
- FIG 4: einen prinzipiellen Verfahrensablauf bei einer konstanten Übertragungszeit über einen Feldbus,
- FIG 5: einen prinzipiellen Verfahrensablauf bei einer variablen Übertragungszeit über einen Feldbus.

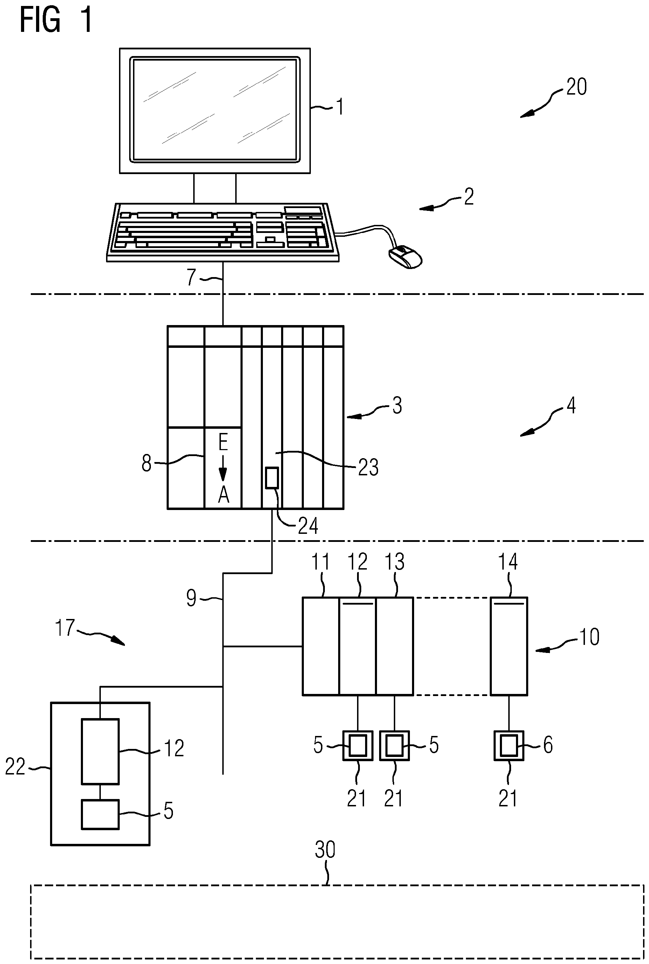

FIG 1 zeigt in schematischer Blockdarstellung einen Ausschnitt aus einem Prozessleitsystem 20 für einen technischen Prozess bzw. eine Prozessanlage 30 mit einer Operatorstation 1 in einer Prozessführungsebene 2, einer speicherprogrammierbaren Steuerung (SPS) 3 in einer Steuerungsebene 4 und Feldgeräten 21,22, die mittels Sensoren 5 auf einer Feldebene 17 Zustände des technischen Prozesses bzw. der Prozessanlage 30 erfassen bzw. mittels Aktoren 6 den Prozess bzw. die Prozessanlage 30 gezielt beeinflussen.

In der Prozessführungsebene 2 findet eine übergeordnete Steuerung und Regelung statt, wobei ein aus der Operatorstation 1 und ggf. weiteren nicht dargestellten Operatorstationen bestehendes Operatorsystem das Bedienen und Beobachten des Prozesses bzw. der Prozessanlage 30 durch Bedienpersonal der Anlage ermöglicht. Bei dem technischen Prozess bzw. der Prozessanlage 30 handelt es sich beispielsweise um eine Anlage der Chemieindustrie, der Öl- und Gas-Industrie, der Metallindustrie, ein Bergwerk oder ein Kraftwerk.

Bei den Sensoren 5 handelt es sich beispielsweise um Sensoren für Druck, Temperatur, Füllstand, Durchfluss.

Bei den Aktoren 6 handelt es sich beispielsweise um Stellungsregler für Regelventile.

Die Operatorstation 1 und die speicherprogrammierbare Steuerung 3 sind über einen Anlagenbus 7 (z. B. Ethernet) miteinander verbunden.

Die speicherprogrammierbare Steuerung 3 weist neben weiteren Baugruppen eine Verarbeitungs-Einheit (CPU-Einheit) 8 auf, die ein Steuer- oder Anwenderprogramm abarbeitet und dabei Werte von Eingangsgrößen E verarbeitet und in deren Abhängigkeit Werte für Ausgangsgrößen A erzeugt.

Die speicherprogrammierbare Steuerung 3 übt dabei feldnahe Steuerungs- und Regelungsfunktionen möglichst in Echtzeit aus. Die Werte der Eingangsgrößen E werden dabei über einen digitalen Feldbus 9 (z. B. PROFIBUS DP) von den Sensoren 5 empfangen und die Werte der Ausgangsgrößen A werden über den digitalen Feldbus 9 an den oder die Aktoren 6 ausgegeben. Zur Anbindung an den Feldbus 9 weist die Steuerung 3 eine Kommunikationsbaugruppe 23 auf, die auch eine Steuerung 24 für den Feldbus 9 ("Feldbus-Controller") umfasst.

FIG 1 zeigt weiterhin ein intelligentes Feldgerät 22, welches direkt an den Feldbus 9 angeschlossen ist. Das Feldgerät 22 umfasst einen Sensor 5 und eine Eingabeeinheit 12.

Da die Feldgeräte 21 selbst keinen Feldbusanschluss aufweisen, sind sie über eine dezentrale Peripheriestation 10 an den digitalen Feldbus 9 angebunden.

Die Steuerung 3 ist folglich über den digitalen Feldbus 9 sowohl mit der Peripheriestation 10 als auch mit dem Feldgerät 22 kommunikativ verbunden.

Die Peripheriestation 10 besteht aus einem Interfacemodul (Kopfbaugruppe) 11 zum Anschluss an den digitalen Feldbus 9 und einer Anzahl von Peripheriebaugruppen. Bei den Peripheriebaugruppen kann es sich um digitale und analoge Ein- und Ausgabebaugruppen bzw. -einheiten handeln. Im Ausführungsbeispiel sind als Peripheriebaugruppen u. a. eine erfindungsgemäße Eingabeeinheit 12, eine weitere Eingabeeinheit 13 und eine Ausgabeeinheit 14 vorhanden.

Die Peripheriebaugruppen sind hier als einkanalige Baugruppen zum Anschluss jeweils eines Feldgeräts 21 (Sensors 5 bzw. Aktors 6) ausgeführt, sie können aber auch mehrkanalig ausgeführt sein, d.h. sie umfassen dann jeweils mehrere Kanäle, an denen jeweils ein Feldgerät 21 (mit Sensor 5 bzw. oder Aktor 6) angeschlossen werden kann.

Zur Vereinfachung der Darstellung sind nur wenige Feldgeräte 21, 22, nur eine einzige dezentrale Peripheriestation 10, nur eine einzige Steuerung 3 sowie nur eine einzige Operatorstation 1 gezeigt. In der Praxis umfassen Anlagen in der Regel jedoch eine Vielzahl derartiger Komponenten.

Von den Eingabeeinheiten 12, 13 werden Signale der Sensoren 5 (z. B. Messströme, Messspannungen) erfasst und Werte dieser Größen ermittelt. Wenn diese Werte nun über den Feldbus 9 an die Steuerung 3 übertragen werden und in der Verarbeitungseinheit 8 als Eingangsgrößen E verwendet werden, dann können die zum Zeitpunkt der Verarbeitung in der Verarbeitungseinheit 8 vorliegenden (scheinbaren) "Ist"-Werte der von den Eingabeeinheiten 12, 13 bereitgestellten Eingangsgrößen E bereits veraltet und nicht mehr aktuell sein. Diese Verzögerung wirkt bei der Steuerung oder Regelung als (zusätzliche) Totzeit. Die Gründe für diese Verzögerung liegen beispielsweise in:
- dem gesamten Vorgang der Signalaufbereitung in der Eingabeeinheit 12, 13, z. B. Analog-Digital-Wandlung und Filterung,
- der Übertragung in einem internen Rückwandbus der Peripheriestation 10 von der Eingabeeinheit 12 zum Interfacemodul 11,
- der Übertragung über den teilweise langsamen Feldbus 9 zu dem Feldbus-Controller 24 in der Steuerung 3,
- der Übertragung vom Feldbus-Controller 24 zur Verarbeitungseinheit 8, und
- Verzögerungen dadurch, dass vor der Verarbeitung in der Verarbeitungseinheit 8 zuerst die Werte aller oder zumindest einer Gruppe von Eingabeeinheiten 12, 13 eingelesen werden.

Dieses Problem kommt insbesondere bei großen Prozessleitsystemen 20 in räumlich weit verteilte Anlagen der Verfahrens- oder Fertigungstechnik zum Tragen, insbesondere bei Anlagen, die sich über mehrere Quadratkilometer erstrecken, wie z. B. Anlagen der chemischen Industrie, Öl- und Gas-Industrie, Metallindustrie, Bergwerke, Kraftwerke, Verkehrsinfrastruktur (Flughäfen, Tunnel), etc..

Gemäß der Erfindung werden deshalb der Verarbeitungseinheit 8 vorausschauend prognostizierte "Zukunfts"-Werte als Eingangsgrößen E bereitgestellt. Damit kann die Verarbeitungseinheit 8 tatsächlich aktuelle "Ist"-Werte für die Eingangsgrößen E verarbeiten anstatt "Alt"-Werte. Hierdurch können die vorstehend geschilderten Verzögerungen kompensiert werden. Eine in der technischen Einrichtung erfasste Größe (z.B. Messstrom, Messspannung) kann kontinuierlich mitverfolgt werden und mithilfe algorithmischer Verfahren können zusätzlich zum oder anstatt dem aktuellen Wert dieser Größe einer oder mehrerer in die Zukunft prognostizierte Werte dieser Größe erzeugt werden und als Eingangsgröße E in der Steuerung 3 verwendet werden.

Die Prognose des zukünftigen Wertes kann dabei grundsätzlich in irgendeiner Komponente auf der Übertragungsstrecke vom Ort der Ermittlung eines Wertes der Größe der Anlage 30 zu der Verarbeitungseinheit 8 erfolgen. Im Fall der Peripheriestation 10 kann dies beispielsweise in der Eingabeeinheit 12, 13, an anderer Stelle in der dezentralen Peripheriestation 10, oder in der Steuerung 3, beispielsweise in deren Kommunikationsbaugruppe 23, insbesondere in der Feldbussteuerung 24, erfolgen. Im Fall des intelligenten Feldgerätes 22 kann dies beispielsweise in der Eingabeeinheit 12 oder in der Steuerung 3, beispielsweise in deren Kommunikationsbaugruppe 23, insbesondere in der Feldbussteuerung 24, erfolgen.

Im Ausführungsbeispiel erfolgt die Prognose des zukünftigen Wertes im Fall der Eingabeeinheiten 12 in der Eingabeeinheit selbst, d.h. der prognostizierte zukünftige Wert wird dann über den Feldbus 9 an die Steuerung 3 übertragen und darin von der Verarbeitungseinheit 8 als Eingangsgröße E verwendet.

Im Fall der Eingabeeinheit 13 erfolgt die Prognose des zukünftigen Wertes dagegen in der Feldbussteuerung 24, d.h. von der Eingabeeinheit 13 wird ein ermittelter (aktueller) Wert einer Größe (z.B. Messstrom, Messspannung) an die Steuerung 3 übertragen und dann von der Feldbussteuerung 24 ein prognostizierter zukünftiger Wert dieser Größe erzeugt, der dann von der Verarbeitungseinheit 8 als Eingangsgröße verwendet wird.

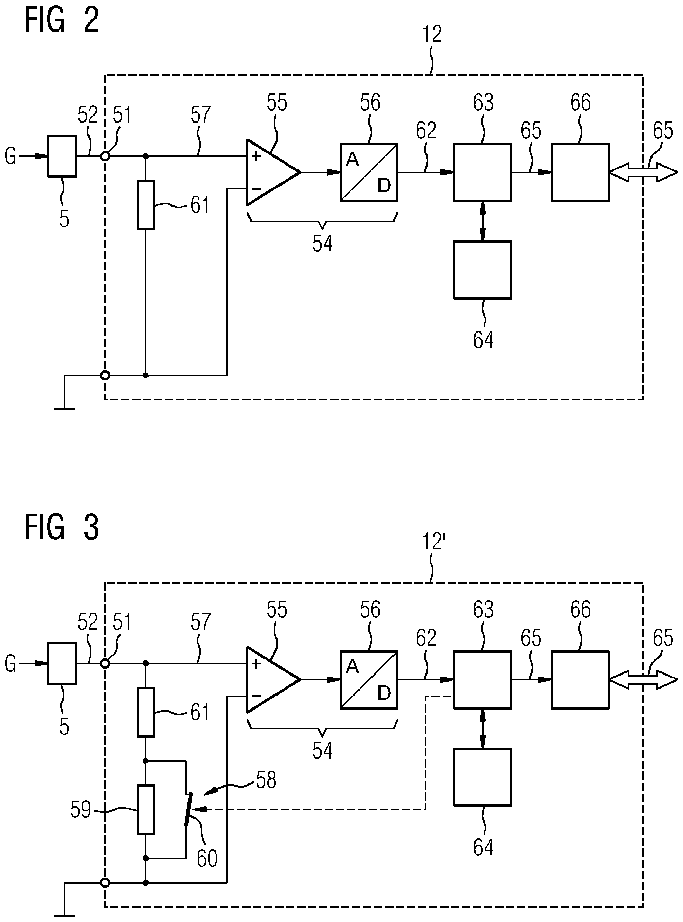

Anhand von FIG 2 soll nun beispielhaft ein prinzipieller Aufbau der Eingabeeinheit 12 erläutert werden, die einen prognostizierten zukünftigen Wert erzeugt und ausgibt. Die Eingabeeinheit 12 ist dabei als Analog-Eingabeeinheit ausgebildet. Diese ist mit ihrem Analogeingang 51 über eine Leitung 52 an den Sensor 5, hier einen Messstromgeber, angeschlossen. Bei dem Messstromgeber handelt es sich beispielsweise um einen Messumformer, der einen zu einer erfassten Messgröße G proportionalen Messstrom I zwischen 4 und 20 mA erzeugt. Bei der Messgröße G handelt es sich um eine Größe der Anlage 30, beispielsweise eine Temperatur, einen Druck, einen Durchfluss, etc..

Die Eingabeeinheit 12 enthält eine Spannungsmesseinrichtung 54 bestehend aus einem Differenzverstärker 55 und einem nachgeordneten Analog-/Digital-Umsetzer 56, die mit ihrem Spannungsmesseingang 57 unmittelbar an dem Analogeingang 51 liegt, d. h. der Analogeingang 51 ist der Spannungsmesseingang 57.

Der Strommesswiderstand 61 ist als Präzisionswiderstand ausgebildet und hat einen Widerstandswert von beispielsweise 250 Ω. Die Spannungsmesseinrichtung 54 erfasst den von dem Messstrom I über dem Strommesswiderstand 61 erzeugten Spannungsabfall und setzt diesen in einen aktuellen digitalen Messwert 62 für die erfasste Messgröße G um.

Der aktuelle Wert 62 der Messgröße G wird von einer Steuereinheit 63 empfangen und an eine Prognoseeinheit 64 übergeben. Die Prognoseeinheit 64 prognostiziert zumindest einen zukünftigen Wert 65 der Messgröße G auf Basis des ermittelten aktuellen Wertes 62 der Größe und gibt diesen prognostizierten, zukünftigen Wert 65 an die Steuereinheit 63 zurück. Die Prognose kann z.B. durch Fortschreiben des Verlaufs, künstliche Intelligenz, Mustererkennung o.ä. erfolgen. Beispielsweise könnte aus den letzten Verläufen ein wahrscheinlicher Verlauf der Messgröße G ermittelt werden (z.B. durch Mittelung). Auch der Verlauf anderer Messgrößen könnte dazu benutzt werden, zukünftige Werte der Messgröße G zu schätzen. Im einfachsten Fall könnte auch ein typischer Verlauf vorher projektiert worden sein, also beispielsweise in der Prognoseeinheit 64 abgespeichert sein.

Die Steuereinheit 63 gibt den prognostizierten, zukünftigen Wert 65 über eine Kommunikationsschnittstelle 66 an die übergeordnete Steuerung 3 aus.

Bei einer Verwendung der Eingabeeinheit 12 in einer dezentralen Peripheriestation 10 gemäß FIG 1 ist die Kommunikationsschnittstelle 66 als eine Anschaltung zu einem internen Bus (z.B. einem Rückwandbus) der Peripheriestation 10 ausgebildet. Die eigentliche Schnittstelle zu dem Feldbus 9 wird dann durch das Interfacemodul 11 bereitgestellt.

Im Fall des Feldgerätes 22 wird die Kommunikationsschnittstelle 66 dagegen bereits eine Schnittstelle zu dem Feldbus 9 sein.

Eine in FIG 3 dargestellte Eingabeeinheit 12' kann wahlweise als Analog-Eingabeeinheit für einen Messstrom oder als Binär-Eingabeeinheit für eine Spannung betrieben werden. Im Unterschied zu der Eingabeeinheit 12 gemäß FIG 2 ist hierbei zusätzlich eine Umschalteinrichtung 58 vorhanden. Die Umschalteinrichtung 58 umfasst eine Parallelschaltung aus einem hochohmigen Widerstand 59 und einem steuerbaren Schalter 60, die in Reihe mit dem niederohmigen Strommesswiderstand 61 an dem Analogeingang 51 bzw. dem Spannungsmesseingang 57 liegt. Der Analogeingang 51 ist somit mittels der steuerbaren Umschalteinrichtung 58 zwischen einem hochohmigen Zustand und einem niederohmigen Zustand umschaltbar.

Der hochohmige Widerstand 59 hat einen Widerstandswert von beispielsweise 1 MΩ. Bei geschlossenem Schalter 60, also im niederohmigen Zustand des Analogeingangs 51, erfasst die Spannungsmesseinrichtung 54 den von dem Messstrom I über dem Strommesswiderstand 61 erzeugten Spannungsabfall und setzt diesen in einen aktuellen digitalen Messwert 62 für die erfasste Messgröße um.

Im Betrieb als Binär-Eingabeeinheit ist der steuerbare Schalter 60 geöffnet, so dass der hochohmige Widerstand 59 und der niederohmige Strommesswiderstand 61 einen Spannungsteiler bilden und die Spannungsmesseinrichtung einen High- oder Low-Pegel, der an dem Eingang der jeweiligen Binäreingabeeinheit anliegenden Spannung misst.

Im Betrieb als Analog-Eingabeeinheit für einen Messstrom ist der steuerbare Schalter 60 geschlossen, so dass der hochohmige Widerstand 59 unwirksam ist und der Messstrom durch den niederohmigen Strommesswiderstand 61 fließt.

Die von den Eingabeeinheiten 12, 12' prognostizierten zukünftigen Werte 65 der Größe G werden an die Steuerung 3 übertragen und in der Verarbeitungseinheit 8 als Eingangsgröße E für die Erzeugung der Ausgangsgröße A verwendet.

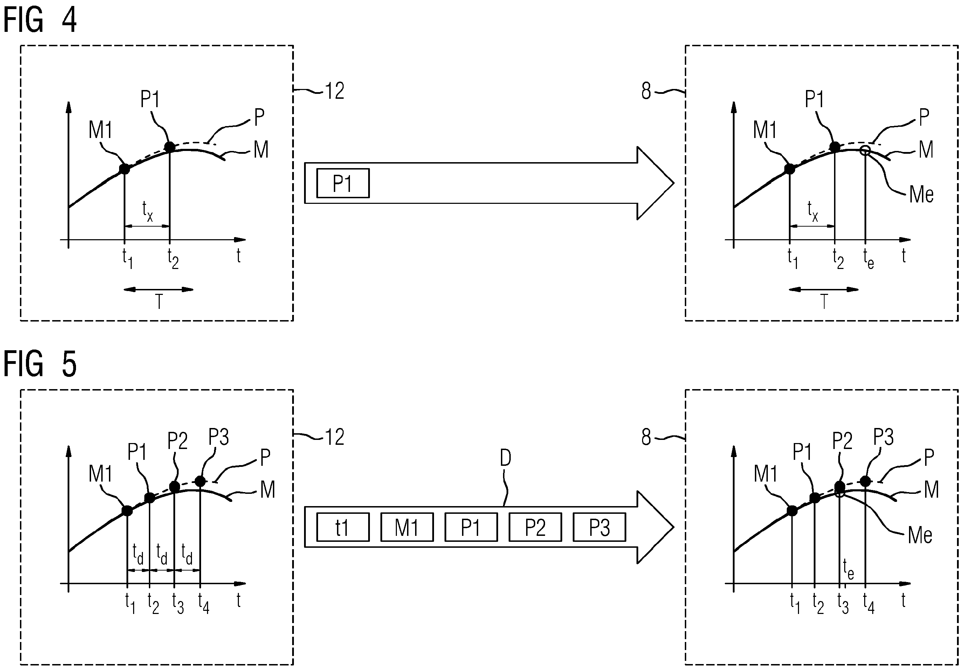

FIG 4 und 5 sollen nun veranschaulichen, wie der prognostizierte zukünftige Wert der Größe G ermittelt und dann bei der Steuerung oder Regelung der Anlage 30 verwendet wird.

Im Fall von FIG 4 wird von einer konstanten Übertragungszeit T von einer Eingabeeinheit 12 der dezentralen Peripheriestation 10 oder dem Feldgerät 22 zu der Verarbeitungseinheit 8 ausgegangen.

Auf Seite der Eingabeeinheit 12 wird die Messgröße G erfasst und ein aktueller Wert M1 der Messgröße G zu einem ersten Zeitpunkt t1 ermittelt. Aus diesem aktuellen Wert M1 der Messgröße wird in der Eingabeeinheit 12 ein prognostizierter, zukünftiger Wert P1 der Messgröße zu einem zweiten Zeitpunkt t2 ermittelt, der um eine definierte Zeitspanne tx gegenüber dem ersten Zeitpunkt t1 in der Zukunft liegt. Die von der Prognoseeinheit 64 gelieferten Werte sind somit immer um die Zeit tx in die Zukunft gerechnet.

Dabei ist mit M ein realer Signalverlauf und mit P ein prognostizierter Signalverlauf bezeichnet.

Der prognostizierte, zukünftige Wert P1 wird über den Feldbus 9 an die Steuerung 3 übertragen. In der Verarbeitungseinheit 8 wird - anstatt des Messwertes M1 - der prognostizierte, zukünftige Wert P1 als Eingangsgröße für die Steuerung oder Regelung verwendet. Mit te ist dabei der Zeitpunkt des Empfangs des Wertes P1 bezeichnet. Me zeigt den Wert an, der zum Empfangszeitpunkt gemessen werden könnte, wenn es keinerlei Verzögerungen geben würde; er kann als Referenz für die Abweichung herangezogen werden.

Die Zeitspanne tx wird in Abhängigkeit von der Übertragungszeit T von der Eingabeeinheit 12 zu der Steuerung 3 eingestellt und ist dabei vorzugsweise kleiner oder gleich der Übertragungszeit T.

Bei tx = 0 verhält sich das Gesamtsystem wie ohne Verwendung prognostizierter zukünftiger Werte.

Bei tx = T stehen der Verarbeitungseinheit 8 der Steuerung 3 zeitlich korrekte prognostizierte Werte zur Verfügung. Die Prognose kann aber Unschärfen aufweisen, abhängig von der Dynamik des Eingangssignals in Relation zu der durch die Prognose zu überbrückenden Übertragungszeit.

Vorteilhaft wird - wie in FIG 4 dargestellt - ein Optimum gewählt zwischen einer Verarbeitung von eher veralteten (damals) zutreffenderen Werten und eher aktuellen, dafür evtl. stärker abweichenden Werten. Es wird folglich 0 < tx < T eingestellt. Es wird also bevorzugt ein Optimum eingestellt zwischen der Genauigkeit der Prognose (je größer die Zeitspanne umso ungenauer die Prognose) und der Verarbeitung von veralteten Werten der Eingangsgröße (je größer die Zeitspanne umso veralteter die Werte der Eingangsgröße).

Im Fall von FIG 5 wird von einer variablen Übertragungszeit T von einer Eingabeeinheit 12 der dezentralen Peripheriestation 10 oder dem Feldgerät 22 zu der Verarbeitungseinheit 8 ausgegangen.

Auch hier wird auf Seite der Eingabeeinheit 12 ein aktueller Wert M1 einer Messgröße G zu einem ersten Zeitpunkt t1 ermittelt. Aus diesem aktuellen Wert M1 der Messgröße G werden in der Eingabeeinheit 12 mehrere prognostizierte, zukünftige Werte P1, P2, P3 der Messgröße erzeugt, die sich auf mehrere Zeitpunkte t2, t3, t4 in der Zukunft beziehen, die um unterschiedliche Zeitspannen, hier um unterschiedliche Vielfache von td, gegenüber dem ersten Zeitpunkt t1 in der Zukunft liegen.

Der ermittelte aktuelle Wert M1 der Größe sowie der Zeitpunkt t1 der Ermittlung des Wertes der Größe und sämtliche prognostizierten zukünftigen Werte P1, P2, P3 dieser Größe können dann in einem gemeinsamen Datensatz D an den Feldbus 9 und somit an die Verarbeitungseinheit 8 in der Steuerung 3 ausgegeben werden.

Es kann dann in der Verarbeitungseinheit 8 eine Auswahl eines oder mehrerer der prognostizierten zukünftigen Werte P1, P2, P3 als Eingangsgröße in Abhängigkeit von einer Übertragungszeit T des ermitteln aktuellen Wertes M1 der Größe oder der prognostizierten zukünftigen Werte P1, P2, P3 der Größe zu der Verarbeitungseinheit 8 in der Steuerung 3 erfolgen.

Beispielsweise kann die Verarbeitungseinheit 8 den Zeitpunkt te des Empfangs des Datensatzes D ermitteln und in Abhängigkeit von einer Differenz zwischen diesem Zeitpunkt te des Empfangs und dem Zeitpunkt t1 der Ermittlung des Wertes der Größe einen der prognostizierten zukünftigen Werte dieser Größe als Eingangsgröße E für die Steuerung oder Regelung der Anlage 30 auswählen. Me zeigt wiederum den Wert an, der zum Empfangszeitpunkt gemessen werden könnte, wenn es keinerlei Verzögerungen geben würde, gerastert durch die "Taktung" aufgrund der zeitlichen Abstände der prognostizierten zukünftigen Werte P1, P2, P3.

Eine maximale Flexibilität und Adaptierbarkeit an sich ändernden Übertragungszeiten ist möglich, wenn - wie hier - die zeitlichen Abstände td der prognostizierten zukünftigen Werte äquidistant sind, die zeitlichen Abstände parametrierbar sind, die Anzahl dieser Werte parametrierbar ist und alle diese Werte zeitgestempelt sind. Ein Zeitstempel bedeutet jedoch keinesfalls, dass jedem Wert eine komplette Uhrzeit mitgegeben werden muss. Eine Uhrzeit für den aktuellen Wert (aus Sicht der Eingabeeinheit 12) genügt bei zeitlich äquidistanten und bekannten Abständen der folgenden Zukunftswerte. Dieser eine und erste Zeitstempel könnte auch ein reiner Zählwert sein, der von einem systemweiten Taktsignal gleichermaßen in den Eingabeeinheiten 12 und der Verarbeitungseinheit 8 hochgezählt wird.

Mit der Erfindung kann somit die Genauigkeit der Steuerung oder Regelung mittels der Steuerung 3 verbessert werden. Die einhergehende Entlastung der Verarbeitungseinheit 8 reduziert deren Kosten und Verlustleistung (C02). Es können dabei bestehende Feldbusse wie etwa PROFINET-I/O oder Profibus-DP genutzt werden: Im Fall von FIG 4 kann die Datenmenge unverändert bleiben. Im Fall von FIG 5 können die Werte mittels konsistenter Nutzdaten übertragen werden. Die Nachteile von kostengünstigen, aber langsamen Übertragungsstrecken können durch die Prognosen teilweise oder ganz kompensiert werden.

Insbesondere können große Schwankungen in der Übertragungszeit bei Cloud-basierter Automatisierung (d.h. einer cloudbasierten Steuer- oder Regelungseinrichtung) kompensiert werden.

## Patentansprüche

1. Verfahren zur Steuerung oder Regelung einer technischen Einrichtung (30), wobei eine Steuer- oder Regelgröße der technischen Einrichtung (30) durch zumindest eine Ausgangsgröße (A) beeinflusst wird, wobei die zumindest eine Ausgangsgröße (A) in Abhängigkeit von zumindest einer Eingangsgröße (E) erzeugt wird, **dadurch gekennzeichnet, dass** als Eingangsgröße (E) ein prognostizierter zukünftiger Wert (P1) einer in der technischen Einrichtung erfassten Größe (G) verwendet wird, um zeitliche Verzögerungen zwischen der Erfassung der Größe (G) und der Erzeugung der Ausgangsgröße (A) aus der Eingangsgröße (E) zumindest teilweise zu kompensieren.

2. Verfahren nach Anspruch 1, umfassend die folgenden Schritte:
a) Erfassen einer Größe (G) der technischen Einrichtung (30), insbesondere eines analogen Sensorsignales,
b) Ermitteln eines Wertes (M1) der Größe (G),
c) Prognostizieren zumindest eines zukünftigen Wertes (P1) der Größe auf Basis zumindest des ermittelten Wertes (M1) der Größe (G),
d) Verwenden des zumindest einen prognostizierten zukünftigen Wert (P1) der Größe (G) als Eingangsgröße (E) für die Erzeugung der zumindest einen Ausgangsgröße (A).

3. Verfahren nach einem der vorhergehenden Ansprüche, wobei die Erzeugung der zumindest einen Ausgangsgröße (A) in Abhängigkeit von der zumindest einen Eingangsgröße (E) in einer Steuer- oder Regelungseinrichtung (3) erfolgt, wobei zumindest die Schritte a) und b) außerhalb der Steuer- oder Regelungseinrichtung (3) durchgeführt werden.

4. Verfahren nach Anspruch 3, wobei sämtliche Schritte a) bis c) außerhalb der Steuer- oder Regelungseinrichtung (3), insbesondere in einer dezentralen Peripheriestation (10) oder in einem Feldgerät (22), durchgeführt werden und wobei der zumindest eine prognostizierte zukünftige Wert (P1) der Größe (G) an die Steuer- oder Regelungseinrichtung (3) übertragen wird.

5. Verfahren nach Anspruch 3 oder 4, wobei die Schritte a) bis b) in einer ersten Komponente außerhalb der Steuer- oder Regelungseinrichtung (3), insbesondere in einer dezentralen Peripheriestation (10) oder in einem Feldgerät (22), durchgeführt werden und wobei der Schritt c) in einer zweiten Komponente durchgeführt wird, die entlang einer Übertragungsstrecke von der ersten Komponente zu der Steuer- oder Regelungseinrichtung (3) angeordnet ist, insbesondere in einer Steuerung (24) eines Feldbusses (9).

6. Verfahren nach einem der vorhergehenden Ansprüche, wobei der Wert (M1) der Größe (G) zu einem ersten Zeitpunkt (t1) erfasst wird und sich der zumindest eine prognostizierte zukünftige Wert (P1) auf einen zweiten Zeitpunkt (t2) bezieht, der um eine definierte oder definierbare Zeitspanne (tx) gegenüber dem ersten Zeitpunkt (t1) in der Zukunft liegt.

7. Verfahren nach Anspruch 6, wobei die Zeitspanne (tx) in Abhängigkeit von einer Übertragungszeit (T) des ermittelten Wertes (M1) der Größe (G) oder des prognostizierten zukünftigen Wertes (P1) der Größe (G) zu einer Steuer- oder Regelungseinrichtung (3) eingestellt wird, die die zumindest eine Ausgangsgröße (A) in Abhängigkeit von der zumindest einen Eingangsgröße (E) erzeugt.

8. Verfahren nach einem der Ansprüche 2 bis 7, wobei der Wert (M1) der Größe (G) zu einem ersten Zeitpunkt (t1) ermittelt wird und wobei daraus mehrere prognostizierte zukünftige Werte (P1, P2, P3) erzeugt werden, die sich auf mehrere Zeitpunkte (t2, t3, t4) in der Zukunft beziehen, die um jeweils unterschiedliche Zeitspannen (td) gegenüber dem ersten Zeitpunkt (t1) in der Zukunft liegen.

9. Verfahren nach Anspruch 8, wobei eine Auswahl eines oder mehrerer der prognostizierten zukünftigen Werte (P1, P2, P3) der Größe (G) als Eingangsgröße (E) in Abhängigkeit von einer Übertragungszeit (T) des ermittelten Wertes (M1) der Größe (G) oder der prognostizierten zukünftigen Werte (P1, P2, P3) der Größe (G) zu einer Steuer- oder Regelungseinrichtung (3) erfolgt, die die zumindest eine Ausgangsgröße (A) in Abhängigkeit von der zumindest einen Eingangsgröße (E) erzeugt.

10. System (20) zur Steuerung oder Regelung einer technischen Einrichtung (30), mit einer Steuer- oder Regelungseinrichtung (3) mit zumindest einer Ausgangsgröße (A), durch die eine Steuer- oder Regelgröße der technischen Einrichtung (30) beeinflussbar ist, wobei die Steuer- oder Regelungseinrichtung (3) ausgebildet ist, die zumindest eine Ausgangsgröße (A) in Abhängigkeit von zumindest einer Eingangsgröße (E) zu erzeugen, **dadurch gekennzeichnet, dass** die Eingangsgröße (E) ein prognostizierter zukünftiger Wert (P1) einer in der technischen Einrichtung (30) erfassten Größe (G) ist, um zeitliche Verzögerungen zwischen der Erfassung der Größe (G) und der Erzeugung der Ausgangsgröße (A) aus der Eingangsgröße (E) zumindest teilweise zu kompensieren.

11. Eingabeeinheit (12) zur Erzeugung einer Eingangsgröße (E) für eine Steuer- oder Regelungseinrichtung (3) einer technischen Einrichtung (30), **dadurch gekennzeichnet, dass** diese dazu ausgebildet ist, die folgenden Schritte durchzuführen:
a) Erfassen einer Größe (G) der technischen Einrichtung (30), insbesondere eines analogen Sensorsignales,
b) Ermitteln eines Wertes (M1) der Größe (G),
c) Prognostizieren zumindest eines zukünftigen Wertes (P1) der Größe (G) auf Basis zumindest des ermittelten Wertes (M1) der Größe (G),
d) Ausgeben des prognostizierten zukünftigen Wertes (P1) der Größe (G).

12. Dezentrale Peripheriestation (10) mit einer Eingabeeinheit (12) gemäß Anspruch 11.

13. Feldgerät (22) mit einer Eingabeeinheit (12) gemäß Anspruch 11.

14. Steuer- oder Regelungseinrichtung (3) für eine technische Einrichtung (30), ausgebildet derart, dass sie zumindest eine Ausgangsgröße (A) in Abhängigkeit von zumindest einer Eingangsgröße (E) erzeugt, **dadurch gekennzeichnet, dass** die Eingangsgröße (E) ein prognostizierter zukünftiger Wert (P1) einer in der technischen Einrichtung (30) erfassten Größe (G) ist.
